# EUROPÄISCHE PATENTSCHRIFT

(11) **EP 4 086 857 B1**
(45) Veröffentlichungstag und Bekanntmachung des Hinweises auf die Patenterteilung: **28.01.2026**
(21) Anmeldenummer: 22171239.1
(22) Anmeldetag: 03.05.2022
(51) Int. Cl.: G06V 20/00, G06V 10/28, G06V 10/62, G06T 7/254

(54) **VERFAHREN ZUR DETEKTION EINER BEWEGUNG VON MINDESTENS EINEM OBJEKT IN EINEM LADERAUM EINES FAHRZEUGS UND FAHRZEUG**
VEHICLE AND METHOD FOR DETECTING MOVEMENT OF AT LEAST ONE OBJECT IN A LOADING SPACE OF A VEHICLE
PROCÉDÉ DE DÉTECTION D'UN MOUVEMENT D'AU MOINS UN OBJET DANS UN ESPACE DE CHARGEMENT D'UN VÉHICULE ET VÉHICULE

(30) Priorität: 05.05.2021 DE 102021111662
(43) Veröffentlichungstag der Anmeldung: 09.11.2022
(73) Patentinhaber: IAV GmbH Ingenieurgesellschaft Auto und Verkehr, 10587 Berlin (DE)
(72) Erfinder: LIPKA, Pascal, 33428 Harsewinkel (DE); BÜTHORN, Robert, 10318 Berlin (DE)
(74) Vertreter: Wanzek, Jan

(56) Entgegenhaltungen:
- US-B1- 10 853 757
- CHOUDHURY SUMAN KUMAR ET AL: "An Evaluation of Background Subtraction for Object Detection Vis-a-Vis Mitigating Challenging Scenarios", IEEE ACCESS, vol. 4, 28 July 2016 (2016-07-28), pages 6133 - 6150, XP055959513, DOI: 10.1109/ACCESS.2016.2608847

## Beschreibung

### Technisches Gebiet

Die Erfindung betrifft ein Verfahren zur Detektion einer Bewegung von mindestens einem Objekt in einem Laderaum eines Fahrzeugs gemäß dem Oberbegriff des Anspruchs 1 und ein Fahrzeug gemäß dem Oberbegriff des Anspruchs 3.

### Stand der Technik

Die DE 11 2017 001 945 T5 beschreibt ein System und ein Verfahren zum Überwachen eines Laderaums eines Güterfahrzeugs.

Das System umfasst eine Vorrichtung mit einem Prozessor und einem Speicher sowie zumindest einen Detektor, der dazu eingerichtet ist, den Laderaum des Güterfahrzeugs zu überwachen und Daten zu erzeugen und an die Vorrichtung zu senden, die eine Eigenschaft des Laderaums und/oder einer Ladung in dem Laderaum beschreiben.

Die Vorrichtung ist dazu eingerichtet, einen Ladungszustand des Laderaums auf der Grundlage der Eigenschaft zu bestimmen, eine empfohlene Geschwindigkeit für das Güterfahrzeug auf der Grundlage des Ladungszustands zu bestimmen und die empfohlene Geschwindigkeit an den Fahrer des Fahrzeugs zu übermitteln.

Die Vorrichtung kann dazu eingerichtet sein, einen Ladungszustand zu bestimmen, der eine Verschiebung der Ladung ist, indem Daten des Laderaums und/oder der Ladung in dem Laderaum verglichen werden, die zu verschiedenen Zeitpunkten erhalten wurden, und dazu, auf der Grundlage des Vergleichs zu bestimmen, ob eine Verschiebung der Ladung stattgefunden hat.

Die US 10,853,757 B1 beschreibt eine videobasierte Erkennung von Objekten in Packet-Verfolgungs-Systemen. Die Bewegung eines Objektes wird in Abhängigkeit des Vergleich zweier Bilder erkannt, die zu unterschiedlichen Zeitpunkten aufgenommen wurden. Der Vergleich erfolgt beispielsweise mittels Differenzbilder.

### Aufgabe der Erfindung

Der Erfindung liegt die Aufgabe zugrunde, ein echtzeitfähiges Verfahren zur Detektion einer Bewegung von mindestens einem Objekt im Laderaum eines Fahrzeugs bereitzustellen.

### Lösung der Aufgabe

Die Aufgabe wird durch ein Verfahren gemäß Anspruch 1 sowie mittels eines Fahrzeugs gemäß Anspruch 3 gelöst.

### Vorteile der Erfindung

Mittels des erfindungsgemäßen Verfahrens und des erfindungsgemäßen Fahrzeugs werden zur Detektion einer Bewegung von mindestens einem Objekt in einem Laderaum des Fahrzeugs mittels mindestens einer Bildaufnahmeeinrichtung, beispielsweise eine bildgebende Sensorik, zeitlich aufeinanderfolgend mindestens zwei Bilder aufgenommen. Die zeitlich aufeinanderfolgend aufgenommenen Bilder werden einer Warteschlange, die nach dem FIFO-Prinzip arbeitet, zugeführt, wobei die Länge der Warteschlange variierbar ist.

Das aktuellste Bild der Warteschlange wird mit dem direkt zeitlich vorangegangenen Bild der Warteschlange verglichen, um einen ersten Bewegungsindikatorwert zu ermitteln.

Weiterhin wird das aktuellste Bild der Warteschlange mit dem zeitlich ältesten Bild der Warteschlange verglichen, um einen zweiten Bewegungsindikatorwert zu ermitteln.

Eine Bewegung von mindestens einem Objekt im Laderaum des Fahrzeugs wird detektiert, sofern der erste Bewegungsindikatorwert gleich "0" (in Worten: null) ist und der zweite Bewegungsindikatorwert größer "0" (in Worten: null) ist.

Erfindungsgemäß erfolgt in einem Verarbeitungszyklus sowohl ein Vergleich des aktuellsten Bildes der Warteschlange mit dem direkt zeitlich vorangegangenen Bild der Warteschlange als auch ein Vergleich des aktuellsten Bildes der Warteschlange mit dem zeitlich ältesten Bild der Warteschlange.

Durch diese beiden Vergleiche innerhalb eines Verarbeitungszyklus wird eine echtzeitfähige Detektion aller Bewegungen in einem Laderaum ermöglicht.

Das Verfahren vergleicht ausgehend von einer statisch platzierten Bildaufnahmeeinrichtung konsekutive Bilder und subtrahiert diese voneinander.

Die Differenz stellt eine Menge an Pixeln dar.

Die Mächtigkeit dieser Menge wird in diesem Anwendungskontext als Indikator für Bewegungen genutzt.

Eine große Mächtigkeit wird dabei als eine große Objektverschiebung interpretiert, eine Kleine, als eher geringere Objektverschiebung, bezüglich des Zeitraumes, in dem die beiden Bilder aufgenommen wurden.

Zur Detektion relativ schneller Bewegungen werden zeitlich nah beieinanderliegende Bilder miteinander verglichen, d.h. die beiden zuletzt aufgenommenen Bilder.

Zur Detektion sehr langsamer Bewegungen, die sich im Vergleich zu zwei direkt aufeinanderfolgenden Bildern nicht genug abzeichnen würden, wird das aktuell aufgenommene Bild mit einem zeitlich weiter zurückliegenden Bild, abhängig von der Länge der Warteschlange, verglichen.

In einem Laderaum eines Fahrzeugs befindliche Objekte beliebiger Geometrie, Größe und Farbe werden, sofern sie von mindestens einer Bildaufnahmeeinrichtung erfassbar sind, bei einer Bewegung registriert, ohne dass ein Trainieren des Verfahrens im Vorfeld nötig ist.

Das System lässt sich in Laderäumen von Fahrzeugen, Anhängern, Schiffen, Flugzeugen etc. leicht integrieren, da nur mindestens eine Bildaufnahmeeinrichtung und ein Prozessor mit entsprechender Verkabelung angebracht werden müssen.

Die Hardwarekosten sind verhältnismäßig gering, da handelsübliche Bildaufnahmeeinrichtungen zusammen mit einem Prozessor genutzt werden können.

Dadurch, dass die Hardware fest angebracht ist und mechanisch unabhängig von den Objekten arbeitet, ist mit keinerlei beachtlichem Verschleiß zu rechnen und die Lebensdauer des Systems entsprechend hoch.

Das System ist ohne großen Mehraufwand skalierbar.

Bei großen Laderäumen können mehrere Bildaufnahmeeinrichtungen genutzt werden.

Das System bringt für den Anwender ein hohes Potential, Unfall- und Schadenskosten zu sparen, mit sich.

In einer vorteilhaften Ausführungsform wird zur Variation der Länge der Warteschlange die Länge ausgehend von einer Mindestlänge mit dem Wert "2" (in Worten: zwei) sukzessive solange auf eine Maximallänge, bei welcher der zweite Bewegungsindikatorwert größer "0" (in Worten: null) ist, erhöht.

In einer weiteren vorteilhaften Ausführungsform werden beim Vergleichen des aktuellsten Bildes der Warteschlange mit dem zeitlich vorangegangenen Bild der Warteschlange und beim Vergleichen des aktuellsten Bildes der Warteschlange mit dem zeitlich ältesten Bild der Warteschlange jeweils mindestens die folgenden Schritte ausgeführt:
Erzeugen eines ersten Differenzbildes und eines zweiten Differenzbildes;
Konturenfindung von bewegten Objekten im ersten Differenzbild und im zweiten Differenzbild;
Berechnen des Flächeninhaltes der Kontur;
Addieren der Flächeninhalte, wobei die Summe der Flächeninhalte den Wert des ersten Bewegungsindikators bzw. des zweiten Bewegungsindikators bildet.

Zur Quantifizierung relativ schneller Bewegungen wird daher ein sog. frame differencing zwischen den zuletzt aufgezeichneten Bildern durchgeführt.

Wenn sich ein Objekt in ausreichender Geschwindigkeit innerhalb des Zeitraumes verschiebt, welchen die zwei aufgezeichneten Bilder eingrenzen, sodass sich eine Region an veränderten Bildpunkten in einem ersten Differenzbild ergibt, dann gilt die Bewegung als erkannt.

Für den Fall jedoch, dass sich ein Objekt sehr langsam bzw. schleichend bewegt, werden das zuletzt aufgezeichnete und das älteste gespeicherte Bild subtrahiert.

Durch den damit betrachteten größeren Zeitraum werden entsprechend langsame Bewegungen durch hervorgehobene Bildpunktregionen im zweiten Differenzbild eher ersichtlich.

Da die Quantifizierung von Objektbewegungen schneller und langsamer Art kontinuierlich in Echtzeit Anwendung finden soll, findet der oben beschriebene Prozess fortlaufend für jedes Bild statt, wobei die definierte Länge der Warteschlange bestimmt, wie viele Bilder aus der Vergangenheit für die Erkennung von langsamen Bewegungen ins Kalkül gezogen werden.

Im Fokus steht, alle Objekte im Laderaum zu segmentieren, die sich bewegen.

Objekte, die über die Zeit statisch sind, fließen daher nicht mit in die Berechnungen des Verfahrens ein.

Somit sind die Bildpunkte ausschlaggebend, die sich über die Zeit ändern.

Der Indikator, der die Bewegungen von Objekten quantifiziert, kann in einem System entscheidende Informationen über den Zustand eines überwachten Laderaums liefern, was wiederum die Berechnung momentaner Fahrmanöver beeinflussen kann.

Zeigt der Indikator beispielsweise viele Bewegungen im überwachten Laderaum an, so sollte die Fahrt möglicherweise unterbrochen werden, um Objekte im Laderaum adäquat für eine gefahrenfreie Weiterfahrt sichern zu können, bevor es zu größeren Beschädigungen an den Objekten oder durch die Objekte auf der Fahrbahn kommt.

Dadurch, dass das Verfahren eine geringe Laufzeitkomplexität aufweist, ist eine Echtzeitausgabe (auf CPU/Prozessor) möglich.

Die Ausgabe des Verfahrens kann dem Fahrer des Fahrzeugs oder dem autonomen System daher unmittelbar mitgeteilt werden, sodass der Fahrer bzw. das System Fahrmanöver anpassen kann.

Unter Anpassung der Fahrmanöver werden hier Anpassungen der Fahrzeugtrajektorien und Beschleunigungsverläufe verstanden, beispielsweise auf den Seitenstreifen fahren und langsam anhalten, um die im Laderaum befindlichen Objekte inspizieren zu können oder Fahrzeuggeschwindigkeit in Kurvenfahrten geringer halten, als bisher praktiziert etc. Besonders im Kontext von autonomen Fahrzeugen ist es wichtig, dass das System Bewegungsinformationen über den Laderaum bzw. Fahrzeuginnenraum erhält.

Im Anwendungsfall von Shuttles beispielsweise, in denen Objekte und Menschen im selben Raum sein können, benötigt ein sicherheitsbedachtes System Informationen über Bewegungen in diesem Raum.

### Zeichnung

Es zeigt:
- Fig.:: ein schematisches Blockschaltbild eines erfindungsgemäßen Verfahrens.

Die Figur zeigt ein schematisches Blockschaltbild eines erfindungsgemäßen Verfahrens.

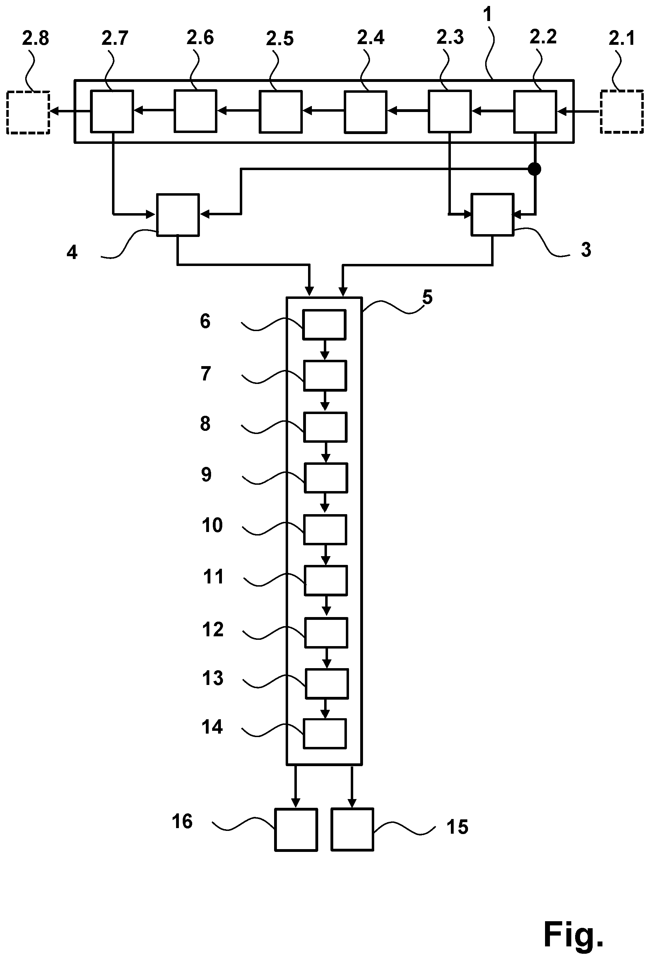

In eine Warteschlange 1, die nach dem FIFO (first in - first out) - Prinzip arbeitet, werden die von mindestens einer nicht dargestellten Bildaufnahmeeinrichtung aufgenommenen Bilder 2.1, 2.2, 2.3, 2.4, 2.5, 2.6, 2.7, 2.8 zugeführt.

Das Bild 2.1 wird zukünftig, d.h. in dem nächsten Verarbeitungszyklus, der Warteschlange 1 zugeführt.

Das Bild 2.2 wurde im aktuellen Verarbeitungszyklus, und somit zeitlich direkt vor dem Bild 2.1, der Warteschlange 1 zugeführt und ist somit das aktuellste Bild der Warteschlange 1.

Das Bild 2.3 wurde zeitlich direkt vor dem Bild 2.2 der Warteschlange 1 zugeführt.

Das Bild 2.4 wurde zeitlich direkt vor dem Bild 2.3 der Warteschlange 1 zugeführt.

Das Bild 2.5 wurde zeitlich direkt vor dem Bild 2.4 der Warteschlange 1 zugeführt.

Das Bild 2.6 wurde zeitlich direkt vor dem Bild 2.5 der Warteschlange 1 zugeführt.

Das Bild 2.7 wurde zeitlich direkt vor dem Bild 2.6 der Warteschlange 1 zugeführt und ist das älteste Bild der Warteschlange 1 und wird im nächsten Verarbeitungszyklus aus der Warteschlange 1 entfernt.

Das Bild 2.8 ist außerhalb der Warteschlange 1.

Aus dem Bild 2.2 und dem Bild 2.3 wird ein erstes Differenzbild 3 gebildet.

Zudem wird aus dem Bild 2.2 und dem Bild 2.7 ein zweites Differenzbild 4 gebildet.

Das erste Differenzbild 3 und das zweite Differenzbild 4 werden einer Bildverarbeitung 5 zugeführt.

In der Bildverarbeitung 5 durchlaufen das erste Differenzbild 3 und das zweite Differenzbild 4 parallel, d.h. unabhängig voneinander, die folgenden Verarbeitungsschritte.

In einem ersten Schritt wird ein Grauwertbild 6 erstellt.

Das Grauwertbild 6 erspart Rechenaufwand und Speicherplatz im Vergleich zu einem Farbbild, da es nur einen Kanal besitzt.

In einem zweiten Schritt wird ein Weichzeichnen 7 (engl.: blurring) durchgeführt.

Das Weichzeichnen 7 reduziert Rauschanteile, die lokal im Bild hohe Gradienten aufweisen können und damit die in einem dritten Schritt durchgeführte Kantendetektion 8 teilweise verfälschen können.

Die Kantendetektion 8 ermöglicht eine Extraktion von Kanten.

Kanten stellen ein signifikantes Merkmal im Anwendungskontext der Überwachung von mindestens einem Objekt im Laderaum dar, da nahezu jedes Objekt, sofern von mindestens einer Bildaufnahmeeinrichtung erfassbar, in irgendeiner Form Kanten aufweist.

Im Idealfall schließen sichtbare Kanten einen oder mehrere Bereiche bzw. Regionen im Bild ein, in denen Bewegungen von Objekten auftreten.

In einem vierten Schritt wird eine Dilatation 9 (engl.: dilation) durchgeführt.

Da die Kantendetektion 8 möglicherweise nicht alle Kanten findet, können in Kantenverläufen Lücken bzw. Unterbrechungen entstehen.

Mit der morphologischen Operation der Dilatation 9 können diese Lücken idealerweise geschlossen und nah beieinanderliegende Kanten miteinander zu einer zusammenhängenden Kante verbunden werden.

Idealerweise werden damit Bereiche von bewegten Objekten gänzlich umschlossen.

In einem fünften Schritt wird eine Konturenfindung 10 durchgeführt.

Bei der Konturenfindung 10 werden die Koordinaten der Umrisse der erweiterten Kanten aus dem vierten Schritt bestimmt.

Von mehreren Konturen, die potentiell verschachtelt (beispielsweise Aufkleber auf dem Objekt) sind, wird jeweils immer nur die äußerste gespeichert, da diese inneren Konturen bzw. eingegrenzte Flächen einschließt.

Zudem besteht erfindungsgemäß die Möglichkeit, die Konturenfindung 10 zeitlich direkt nach der Bildung des ersten Differenzbildes 3 und des zweiten Differenzbildes 4 durchzuführen, so dass die Zwischenschritte (Grauwertbild 6, Weichzeichnen 7, Kantendetektion 8 und Dilatation 9) ausgelassen werden.

In einem fünften Schritt wird eine Filterung 11 durchgeführt.

Flächen aus dem ersten Differenzbild 3 bzw. zweiten Differenzbild 4, die unbeabsichtigt entstanden sind, beispielsweise durch Rauschanteile oder irrelevante kleinere dynamische Objekte (in Laderäumen können beispielsweise Endstücke von Befestigungsseilen oder Spanngurten sein), die flächenmäßig eine bestimmte Größe im Überwachungsbild nicht überschreiten, können in dem fünften Schritt mit Hilfe eines Schwellenwertes für den Flächeninhalt der Konturen herausgefiltert werden.

Das Verfahren detektiert Bewegungen von Objekten in Laderäumen und quantifiziert diese. Es werden anschließend nur quantifizierte Bewegungen weiterverarbeitet, die über dem voreingestellten Schwellenwert liegen.

Der Schwellenwert kann derart bestimmt werden, dass virtuell (in einer Videoaufzeichnung) oder physisch ein Objekt minimaler Größe, die vom System noch erfassbar sein soll, an einer Stelle im Überwachungsraum (Laderaum) platziert wird, die sich möglichst weit von der Bildaufnahmeeinrichtung entfernt befindet.

Die Anzahl der Bildpunkte, die dieses Objekt im Bild belegt, kann als Schwellenwert gewählt werden.

Der Flächeninhalt des ausgewählten Objekts sollte jedoch im Idealfall größer sein als kleine dynamische Regionen im Bild, die potentiell durch Rauschen entstehen, da diese sonst in den Bewegungsindikator mit einfließen, obwohl sie keiner Objektbewegung zuzuschreiben sind.

Mit Hilfe der optionalen Schwellenwertangabe des Nutzers kann der Schwellenwert als ein Parameter für die Bewegungsmeldungsempfindlichkeit individuell an einen spezifischen Laderaum angepasst werden.

So können beispielswiese leichte Erschütterungen auf einer bestimmten Ladefläche herausgefiltert werden, die dann vom Verfahren nicht weiter berücksichtigt werden.

Die optionale Eingabe der Länge der Warteschlange 1 determiniert, wie viele Bilder 2.1, 2.2, 2.3, 2.4, 2.5, 2.6, 2.7, 2.8 der Vergangenheit mitberücksichtigt werden sollen, um auch kriechende, langsame Bewegungen zu erfassen.

In einem siebten Schritt wird eine konvexe Hüllenbildung 12 durchgeführt.

Durch eine bildbedingte Unvollkommenheit der vorherigen Bildverarbeitungsschritte, wie die fehlerhafte Kantendetektion 8, kann es sein, dass Konturen nicht wie gewollt ein ganzes sich bewegendes Objekt bzw. eine sich bewegende Objektgruppe umgeben, sondern nur Teilflächen konkaver Form davon.

Damit entsteht ein Fehler bei der Flächeninhaltsberechnung der sich bewegenden Objekte. In der Annahme, dass die überwachten Objekte in der Regel konvexe Körper, ohne Löcher etc., aufweisen, wird eine konvexe Hülle der betrachteten Konturen gebildet und der Fehler der Berechnung des (sichtbaren) Flächeninhalts der überwachten Objekte reduziert.

In einem achten Schritt wird eine Flächeninhaltsberechnung 13 durchgeführt.

Die im siebten Schritt berechneten konvexen Hüllen umschließen idealerweise die Bereiche, in denen sich Objekte bewegt haben.

Um diese Bereiche der Bewegungen zu quantifizieren, wird jeweils der Flächeninhalt dieser Bereiche bzw. konvexen Hüllen berechnet.

Zudem besteht erfindungsgemäß die Möglichkeit, die Flächeninhaltsberechnung 13 zeitlich direkt nach der Konturenfindung 10 durchzuführen, so dass die Zwischenschritte (Filterung 11 und konvexe Hüllenbildung 12) ausgelassen werden.

In einem neunten Schritt wird eine Addition 14 der im achten Schritt berechneten Flächeninhalte durchgeführt.

Nach dem Durchlaufen der Bildverarbeitung 5 werden sowohl ein erster Bewegungsindikatorwert 15 als auch ein zweiter Bewegungsindikatorwert 16 ausgegeben.

Der erste Bewegungsindikatorwert 15, der sich aus dem ersten Differenzbild 3 ergibt, quantifiziert ausschließlich das Maß an verhältnismäßig schnellen Bewegungen.

Zeitgleich langsam stattfindende Bewegungen von Objekten im Laderaum haben darin keine Auswirkung, da sie zu keiner erkennbaren Kantenverschiebung im ersten Differenzbild 3 führen.

Der zweite Bewegungsindikatorwert 16, der sich aus dem zweiten Differenzbild 4 ergibt, stellt ein Maß dar, das verhältnismäßig langsame und schnelle Bewegungen gleichzeitig quantifiziert.

In dem Fall, dass in einem Bild gleichzeitig langsame und schnelle Bewegungen stattfinden, können diese nicht differenziert quantifiziert werden, da in diesem Verfahren keine Aussage darüber getroffen werden kann, welche Bildpunkte im zweiten Differenzbild 4 auf welche Bewegungsgeschwindigkeit von einem Objekt im Laderaum zurückzuführen sind.

Für den Fall der gleichzeitigen langsamen und schnellen Bewegung in einem zweiten Differenzbild 4 wird daher in Anbetracht des Anwendungskontextes eines Laderaums entschieden, dass schnelle Bewegungen, die ausschlaggebenden für die Bewegungsindikation sind, da sie zu stärkeren Beschädigungen der im Laderaum befindlichen Objekte führen können als langsame Bewegungen.

Daher erfolgt erfindungsgemäß eine Detektion einer Bewegung, sofern der erste Bewegungsindikatorwert 15 größer "0" (in Worten: null) ist.

Weiterhin gilt, dass wenn der erste Bewegungsindikatorwert 15 gleich "0" (in Worten: null) ist und der zweite Bewegungsindikatorwert 16 größer "0" (in Worten: null) ist, erfindungsgemäß eine Detektion mindestens einer Bewegung erfolgt.

Die in der Figur dargestellte Warteschlange 1 weist eine Länge von "6" (in Worten: sechs) auf.

Beim Start des erfindungsgemäßen Verfahrens weist die Warteschlange 1 im ersten Verarbeitungszyklus eine Länge von "2" (in Worten: zwei) auf.

Im ersten Verarbeitungszyklus stimmen daher das erste Differenzbild 3 und das zweite Differenzbild 4 überein.

Weiterhin stimmen im ersten Verarbeitungszyklus der erste Bewegungsindikatorwert 15 mit dem zweiten Bewegungsindikatorwert 16 überein.

Sofern im ersten Verarbeitungszyklus der zweite Bewegungsindikatorwert größer "0" (in Worten: null) ist, ist die Länge der Warteschlange 1 im zweiten Verarbeitungszyklus unverändert bei "2" (in Worten: zwei).

Sofern im ersten Verarbeitungszyklus der zweite Bewegungsindikatorwert gleich "0" (in Worten: null) ist, wird im zweiten Verarbeitungszyklus die Länge der Warteschlange 1 von "2" (in Worten: zwei) auf "3" (in Worten: drei) erhöht.

In den nachfolgenden Verarbeitungszyklen wird die Länge der Warteschlange 1 sukzessive erhöht, sofern der zweite Bewegungsindikatorwert 16 gleich "0" (in Worten: null) ist.

### Bezugszeichenliste

- 1: Warteschlange
- 2.1: Bild
- 2.2: Bild
- 2.3: Bild
- 2.4: Bild
- 2.5: Bild
- 2.6: Bild
- 2.7: Bild
- 2.8: Bild
- 3: erstes Differenzbild
- 4: zweites Differenzbild
- 5: Bildverarbeitung
- 6: Grauwertbild
- 7: Weichzeichnen
- 8: Kantendetektion
- 9: Dilatation
- 10: Konturenfindung
- 11: Filterung
- 12: konvexe Hüllenbildung
- 13: Flächeninhaltsberechnung
- 14: Addition
- 15: erster Bewegungsindikatorwert
- 16: zweiter Bewegungsindikatorwert

## Patentansprüche

1. Verfahren zur Detektion mindestens einer Bewegung von mindestens einem Objekt in einem Laderaum eines Fahrzeugs, wobei mittels mindestens einer Bildaufnahmeeinrichtung zeitlich aufeinanderfolgend mindestens zwei Bilder (2.1; 2.2; 2.3; 2.4; 2.5; 2.6; 2.7; 2.8) aufgenommen werden, und wobei zu verschiedenen Zeitpunkten aufgenommene Bilder (2.1; 2.2; 2.3; 2.4; 2.5; 2.6; 2.7; 2.8) verglichen werden, **aufweisend** zumindest folgende Verfahrensschritte:
• Zuführen der zeitlich aufeinanderfolgend aufgenommenen Bilder (2.1; 2.2; 2.3; 2.4; 2.5; 2.6; 2.7; 2.8) einer Warteschlange (1), die nach dem FIFO-Prinzip arbeitet, wobei die Länge der Warteschlage (1) variierbar ist;
• Vergleichen eines aktuellsten Bildes (2.2) der Warteschlange (1) sowohl mit einem direkt zeitlich vorangegangenen Bild (2.3) der Warteschlange (1) zur Ermittlung eines ersten Bewegungsindikatorwertes (15) als auch mit einem zeitlich ältesten Bild (2.7) der Warteschlange (1) zur Ermittlung eines zweiten Bewegungsindikatorwertes (16);
• Detektion einer Bewegung, sofern der erste Bewegungsindikatorwert (15) gleich "0" ist und der zweite Bewegungsindikatorwert (16) größer "0" ist,
wobei beim Vergleichen des aktuellsten Bildes (2.2) der Warteschlange (1) mit dem zeitlich vorangegangenen Bild (2.3) der Warteschlange (1) und beim Vergleichen des aktuellsten Bildes (2.2) der Warteschlange (1) mit dem zeitlich ältesten Bild (2.7) der Warteschlange (1) jeweils mindestens die folgenden Schritte ausgeführt werden:
• Erzeugen eines ersten Differenzbildes (3) und eines zweiten Differenzbildes (4);
• Konturenfindung von bewegten Objekten im ersten Differenzbild und im zweiten Differenzbild;
• Berechnen des Flächeninhaltes der Kontur;
• Addieren der Flächeninhalte, wobei die Summe der Flächeninhalte den Wert des ersten Bewegungsindikators (15) bzw. des zweiten Bewegungsindikators (16) bildet.

2. Verfahren nach Anspruch 1, **dadurch gekennzeichnet, dass** zur Variation der Länge der Warteschlange (1) die Länge ausgehend von einer Mindestlänge mit dem Wert "2" sukzessive solange auf eine Maximallänge, bei welcher der zweite Bewegungsindikatorwert (16) größer "0" ist, erhöht wird.

3. Fahrzeug mit mindestens einer Bildaufnahmeeinrichtung und mindestens einem Prozessor, **dadurch gekennzeichnet, dass** der mindestens eine Prozessor dazu eingerichtet ist, ein Verfahren nach mindestens einem der Ansprüche 1 bis 2 auszuführen.

## Claims

1. Method for detecting at least one movement of at least one object in a loading space of a vehicle, wherein by means of at least one image capturing device at least two images (2.1; 2.2; 2.3; 2.4; 2.5; 2.6; 2.7; 2.8) are recorded successively in time, and wherein images (2.1; 2.2; 2.3; 2.4; 2.5; 2.6; 2.7; 2.8) recorded at different points in time are compared, comprising at least the following method steps:
• Supplying the successively recorded images (2.1; 2.2; 2.3; 2.4; 2.5; 2.6; 2.7; 2.8) to a queue (1) operating according to the FIFO principle, wherein the length of the queue (1) is variable;
• Comparing a most recent image (2.2) of the queue (1) both with a directly preceding image (2.3) of the queue (1) for determining a first motion indicator value (15) and with a temporally oldest image (2.7) of the queue (1) for determining a second motion indicator value (16);
• Detecting a movement if the first motion indicator value (15) equals "0" and the second motion indicator value (16) is greater than "0",
wherein when comparing the most recent image (2.2) of the queue (1) with the preceding image (2.3) of the queue (1) and when comparing the most recent image (2.2) of the queue (1) with the oldest image (2.7) of the queue (1), at least the following steps are carried out:
• Generating a first difference image (3) and a second difference image (4);
• Finding contours of moving objects in the first difference image and in the second difference image;
• Calculating the area of the contour;
• Adding the areas, wherein the sum of the areas forms the value of the first motion indicator (15) or the second motion indicator (16).

2. Method according to claim 1, **characterized in that** for varying the length of the queue (1), the length starting from a minimum length with the value "2" is successively increased up to a maximum length at which the second motion indicator value (16) is greater than "0".

3. Vehicle with at least one image capturing device and at least one processor, **characterized in that** the at least one processor is configured to execute a method according to at least one of claims 1 to 2.

## Revendications

1. Procédé de détection d'au moins un mouvement d'au moins un objet dans un espace de chargement d'un véhicule, dans lequel, au moyen d'au moins un dispositif de prise d'images, au moins deux images (2.1; 2.2; 2.3; 2.4; 2.5; 2.6; 2.7; 2.8) sont enregistrées successivement dans le temps, et dans lequel des images (2.1; 2.2; 2.3; 2.4; 2.5; 2.6; 2.7; 2.8) enregistrées à différents instants sont comparées, comprenant au moins les étapes suivantes:
• Acheminer les images enregistrées successivement (2.1; 2.2; 2.3; 2.4; 2.5; 2.6; 2.7; 2.8) vers une file d'attente (1) fonctionnant selon le principe FIFO, la longueur de la file d'attente (1) étant variable ;
• Comparer une image la plus récente (2.2) de la file d'attente (1) à la fois avec une image immédiatement précédente (2.3) de la file d'attente (1) pour déterminer une première valeur indicatrice de mouvement (15) et avec une image la plus ancienne (2.7) de la file d'attente (1) pour déterminer une seconde valeur indicatrice de mouvement (16);
• Détecter un mouvement si la première valeur indicatrice de mouvement (15) est égale à « 0 » et la seconde valeur indicatrice de mouvement (16) est supérieure à « 0 »,
les comparaisons de l'image la plus récente (2.2) avec l'image précédente (2.3) et avec l'image la plus ancienne (2.7) de la file d'attente (1) comprenant au moins les étapes suivantes :
• Générer une première image de différence (3) et une seconde image de différence (4) ;
• Trouver les contours des objets en mouvement dans la première image de différence et dans la seconde image de différence ;
• Calculer la surface du contour ; Additionner les surfaces, la somme des surfaces constituant la valeur du premier indicateur de mouvement (15) ou du second indicateur de mouvement (16).

2. Procédé selon la revendication 1, **caractérisé en ce que**, pour faire varier la longueur de la file d'attente (1), la longueur, à partir d'une longueur minimale de valeur « 2 », est augmentée successivement jusqu'à une longueur maximale pour laquelle la seconde valeur indicatrice de mouvement (16) est supérieure à « 0 ».

3. Véhicule comprenant au moins un dispositif de prise d'images et au moins un processeur, **caractérisé en ce que** ledit processeur est configuré pour exécuter un procédé selon au moins l'une des revendications 1 à 2.
